# EUROPÄISCHE PATENTSCHRIFT

(11) **EP 2 364 374 B1**
(45) Veröffentlichungstag und Bekanntmachung des Hinweises auf die Patenterteilung: **19.06.2013**
(21) Anmeldenummer: 09760152.0
(22) Anmeldetag: 26.11.2009
(51) Int. Cl.: C21D 10/00, B64F 5/00

(54) **REPARATURVERFAHREN ZUM VERMEIDEN EINER RISSBILDUNG UND EINER VERLANGSAMUNG DES RISSFORTSCHRITTS IN METALLISCHEN FLUGZEUGSTRUKTUREN MITTELS LASERSCHOCKSTRAHLEN**
REPAIRING PROCESS FOR PREVENTING CRACK INITIATION AND SLOWING DOWN CRACK PROPAGATION IN METALLIC AIRCRAFT STRUCTURES BY LASER SHOCK PEENING
PROCEDE DE REPARATION POUR EMPECHER LA FORMATION DE FISSURE ET RALENTIR LA PROPAGATION DE FISSURE DANS DES STRUCTURES METALLIQUES POUR AVION AU MOYEN DE MARTELAGE PAR CHOC LASER

(30) Priorität: 05.12.2008 DE 102008044407; 05.12.2008 US 120158 P
(43) Veröffentlichungstag der Anmeldung: 14.09.2011
(73) Patentinhaber: Airbus Operations GmbH, 21129 Hamburg (DE)
(72) Erfinder: STEINWANDEL, Jürgen, 88690 Uhldingen-Mühlhofen (DE); FURFARI, Domenico, 22589 Hamburg (DE); OHRLOFF, Nikolaus, 21614 Buxtehude (DE); DALLE DONNE, Claudio, 81827 München (DE)
(74) Vertreter: Isarpatent
(86) Internationale Anmeldenummer: PCT/EP2009/065931
(87) Internationale Veröffentlichungsnummer: WO 2010/063643

(56) Entgegenhaltungen:
- EP-A1- 1 978 114
- WO-A1-96/27684
- GB-A- 2 257 163
- US-A- 4 401 477
- US-B1- 6 203 633
- US-B1- 6 288 358
- KAYSSER W: "SURFACE MODIFICATIONS IN AEROSPACE APPLICATIONS" SURFACE ENGINEERING, INSTITUT OF MATERIALS, LONDON, GB, Bd. 17, Nr. 4, 1. Januar 2001 (2001-01-01) , Seiten 305-312, XP008013979 ISSN: 0267-0844
- RUBIO-GONZALEZ C ET AL: "Effect of laser shock processing on fatigue crack growth and fracture toughness of 6061-T6 aluminum alloy" MATERIALS SCIENCE AND ENGINEERING A: STRUCTURAL MATERIALS:PROPERTIES, MICROSTRUCTURE & PROCESSING, LAUSANNE, CH, Bd. 386, Nr. 1-2, 25. November 2004 (2004-11-25), Seiten 291-295, XP004604669 ISSN: 0921-5093
- SHEPARD M J ET AL: "INTRODUCTION OF COMPRESSIVE RESIDUAL STRESSES IN TI-6AL-4V SIMULATED AIRFOILS VIA LASER SHOCK PROCESSING" JOURNAL OF MATERIALS ENGINEERING AND PERFORMANCE, ASM INTERNATIONAL, MATERIALS PARK, OH, US, Bd. 10, Nr. 6, 1. Dezember 2001 (2001-12-01), Seiten 670-678, XP001089758 ISSN: 1059-9495
- RODOPOULOS C A ET AL: "EFFECT OF CONTROLLED SHOT PEENING AND LASER SHOCK PEENING ON THE FATIGUE PERFORMANCE OF 2024-T351 ALUMINUM ALLOY" JOURNAL OF MATERIALS ENGINEERING AND PERFORMANCE, ASM INTERNATIONAL, MATERIALS PARK, OH, US, Bd. 12, Nr. 4, 1. August 2003 (2003-08-01) , Seiten 414-419, XP001169992 ISSN: 1059-9495
- LIU, Q. ET AL: "The effect of laser power density on the fatigue life of laser - shock - peened 7050 aluminium alloy" FATIGUE & FRACTURE OF ENGINEERING MATERIALS & STRUCTURES , 30(11), 1110-1124 CODEN: FFESEY; ISSN: 8756-758X, 2007, XP002576049
- Alberto Ruiz: "Surface acoustic wave velocity measurements on surface-treated metals by laser-ultrasonic spectroscopy" 17. Februar 2004 (2004-02-17), University of Cincinnati , Cincinnati , XP002576050 Seite 90 - Seite 93; Abbildungen 4.1-4.2 Seite 118 - Seite 125; Abbildungen 5.1-5.3

## Beschreibung

Die vorliegende Erfindung betrifft ein **Reparaturverfahren** zum Vermeiden einer Rissbildung und einer Verlangsamung des Rissfortschritts in **bei einer unsachgemäßen Wartung beschädigten** metallischen Flugzeugstrukturen.

Risse in Flugzeugstrukturen sind in der Regel auf eine Materialschwächung in Folge von statischen oder dynamischen mechanischen Belastungen zurückzuführen. Insbesondere ergibt sich eine Materialermüdung aus Schwingungsbelastungen. Risse werden als schwere Schäden der Flugzeugstruktur angesehen und erfordern sofortige Reparaturmaßnahmen. Die genannten Risse resultieren aus dem normalen Flugbetrieb.

Zusätzlich kann sich eine Rissbildung und ein Rissfortschritt als Folge von einer versehentlichen Beschädigung einer Flugzeugstruktur in Form von Einritzungen bei einer unsachgemäßen Wartung ergeben. Häufig treten Einritzungen bei der Wartung von Nietverbindungen, die zwei im Überlappungsstoß angeordnete Bleche verbinden, auf. Die Nietverbindungen werden zur Wartung geöffnet und vor dem erneuten anbringen der Nietverbindungen wird zwischen die Bleche im Überlappungsstoß ein Korrosionsschutz bzw. eine Klebepaste eingebracht. Nach der Wartung werden die Nietverbindungen wieder geschlossen, wobei die Klebepaste teilweise aus dem Überlappungsbereich herausgedrückt wird. Die überschüssige überstehende Paste wird später vom Wartungspersonal, z.B. mit einem Messer entfernt. Dabei entstehen häufig in der Nähe der Überlappungsstöße Einritzungen in den Blechen.

Solche versehentlich erzeugten Schäden bildet die Ausgangsstelle für eine nachfolgende Rissbildung bzw. einen nachfolgenden Rissfortschritt. Daher ist es zweckmäßig, solche Schäden durch Reparaturmaßnahmen zu beheben, um einen gewünschten Grad an Flugsicherheit zu gewährleisten.

Im Stand der Technik werden im Rahmen der Wartung Risse repariert, indem der gesamte Bereich, indem sich Risse gebildet haben, ausgeschnitten wird und durch neues Material, was dort eingefügt wird bzw. darüber angeordnet wird, ersetzt wird. Im Falle von Kratzern, wo es erwartet wird, dass sich Risse ausgehend von den Kratzern bilden werden, wird der Reparaturvorgang gegenwärtig in der gleichen Weise, wie bei der Rissreparatur durchgeführt. Die derzeitigen Reparaturverfahren haben Nachteile. Zum Einen ist die Ersetzung von Tragwerkbereichen zeitaufwändig und hat erhöhte Reparatur und Betriebskosten zur Folge. Die Ersetzungsbereiche sind ferner Schwachstellen insbesondere in Bezug auf eine homogene durchgehende Materialfestigkeit. Dadurch bieten die Reparaturbereiche nur eine verringerte Beständigkeit gegen eine neue Rissbildung.

Die beschriebene Problematik besteht insbesondere bei Aluminiumbasislegierungen, in reduzierten Umfang jedoch auch bei Titanlegierungen.

Es ist im Stand der Technik bekannt, Materialbereiche, die für eine Rissbildung gefährdet sind, mittels einem Laserschockstrahlen (Laserschockhärten, Laserschockbehandeln oder -hämmern) vor dem Einsatz zu behandeln. Laserschockstrahlen ist ein Verfahren zum Erzeugen eines Bereiches von tiefen Druckrestspannungen, indem die Oberfläche von einem Werkstück durch Laserschockstrahlen bearbeitet wird. Das Laserschockstrahlen verwendet üblicherweise Strahlungspulse aus mit hoher Leistung gepulsten Lasern, um Stoß- bzw. Schockwellen auf die Oberfläche von einem Werkstück zu übertragen. Durch den auf die Bauteiloberfläche auftretenden gepulsten Laserstrahl aus der Laserstrahlquelle, wird eine starke lokale Druckkraft auf einen Abschnitt der Oberfläche erzeugt. An der Auftreffstelle des Laserstrahls entsteht dabei durch eine plötzliche Abtragung oder Verdampfung einer dünnen Schicht dieser Oberfläche oder einer Beschichtung (wie zum Beispiel eines Bandes oder einer Anstrich) ein Plasma, wodurch eine Explosivkraft erzeugt wird. Der Druckimpuls aus dem sich rasch ausdehnenden Plasma gibt eine in den Gegenstand wandernde Schockwelle ab. Diese von dem Laserimpuls bewirkte Druckschockwelle führt zu tiefen plastischen Druckverformungen im Bauteil. Diese plastischen Verformungen erzeugen im Material Druckrestspannungen. Das Laserschockstrahlen wird in dem US-Patent 3,850,698 mit der Bezeichnung "Altering Material Properties" und dem US-Patent 4,401,477 mit der Bezeichnung "Laser Shock Processing" beschrieben. Beim Laserschockstrahlen wird eine starke lokale Druckkraft auf einen Teil der Werkstückoberfläche übertragen. Laserschockstrahlen wird verwendet, um eine druckbeanspruchte Schutzschicht an der äußeren Oberfläche von einem Werkstück hervorzurufen, so dass die Widerstandsfähigkeit des Werkstückes gegenüber einem Ermüdungsbruch wesentlich vergrößert wird. Diese Anwendung ist z.B. in dem US-Patent 4,937,421 mit der Bezeichnung "Laser Peening System and Method" beschrieben.

Es existieren ferner mehrere wissenschaftliche Arbeiten zum Laserschockstrahlen, welche unter anderem die Veränderung der Materialeigenschaften, des Ermüdungsverhaltens und der Veränderung der Mikrostruktur beim Laserschockstrahlen beschreiben:

KAYSSER W: "SURFACE MODIFICATIONS IN AEROSPACE APPLICATIONS", SURFACE ENGINEERING; INSTITUT OF MATERIALS, LONDON, GB, Bd.17, Nr 4, 1. Januar 2001, Seiten 305-312, ISSN: 0267-0844. RUBIO-GONZALES C ET AL: "Effect of laser shock processing on fatique crack growth and fracture toughness of 6061-T6 aluminium alloy", MATERIALS SCIENCE AND ENGINEERING A: STRUCTURAL MATERIALS: PROPERTIES, MICROSTRUCTURE & PROCESSING,LAUSANNE, CH; Bd.386, Nr 1-2, 25. November2004, Seiten 291-295, ISSN 0921-5093.

SHEPHARD M J ET AL: "INTRODUCTION OF COMPRESSIVE RESIDUAL STRESSES IN TI-6AL-4V SIMULATED AIRFOILS VIA LASER SHOCK PROCESSING", JOURNAL OF MATERIALS ENGINEERING AND PERFORMANCE, 20030801 ASM INTERNATIONAL, MATERIALS PARK, OH, US, Vol:12, Nr:4, Page(s):414 - 419, ISSN 1059-9495.

RODOPOULOS C A; ET AL: "EFFECT OF CONTROLLED SHOT PEENING AND LASER SHOCK PEENING ON THE FATIGUE PERFORMANCE OF 2024-T351 ALUMINUM ALLOY", JOURNAL OF MATERIALS ENGINEERING AND PERFORMANCE, 20030801 ASM INTERNATIONAL, MATERIALS PARK, OH, US, Vol:12, Nr:4, Page(s):414 - 419, ISSN 1059-9495.

LIU Q; ET AL: "The effect of laser power density on the fatigue life of laser-shock-peened 7050 aluminium alloy", FATIGUE AND FRACTURE OF ENGINEERING MATERIALS AND STRUCTURES, 20071101 PERGAMON PRESS, OXFORD, GB, Vol:30, Nr:11, Page(s):1110 - 1124, ISSN 8756-758X.

RUIZ A: "Surface acoustic wave velocity measurements on surface-treated metals by laser-ultrasonic spectroscopy", DISSERTATION submitted to the Division of Research and Advances Studies of the University of Cincinnati in partial fulfillment of the requirements for the degree of Doctor of Philosophy, 20040217, Page(s):I - V,1-146.

Ferner beschreibt die EP 1 978 114 A1 die Bearbeitung von Merkmalen in Laserschock-gestrahlten Bereichen.

Die WO96/27684A1 beschreibt eine statische Gasturbinenkomponente mit einem rissanfälligen Panel, an dem eine längliche, durch "Laser Lhock Peening" mit tiefen Eigenspannungen versehene Region zum Ablenken von Rissen vorgesehen ist.

Die GB 2 257 163 A beschreibt ein Verfahren zum Verbessern des Rissfortschrittwiderstandes von alpha-beta Titanlegierungen durch Bestrahlen der Oberfläche des Bauteils/Blechs mit einem Laserstrahl nach dem Sandstrahlen.

Die US 6 203 633 B1 beschreibt ein Verfahren zur Veränderung der Eigenschaften eines festen Materials durch Variieren der Temperatur des festen Materials entweder vor oder nach oder vor und nach der Laser-Schock-Bearbeitung des festen Materials.

Die US 6 288 358 B1 beschreibt ein System zum Remote-Laserschock-Bearbeiten eines Bauteils.

Ein generelles Behandeln im Vorhinein von im Hinblick auf eine Rissbildung risikobehafteten Bereichen, z.B. mittels einem Laserschockstrahlen ist kostenintensiv. Die Schäden in Form von Einritzungen treten, wie oben beschrieben, nur lokal an bestimmten Stellen auf. Nur in den Bereichen, die diese Schadstellen umgegeben, ist eine Behandlung im Hinblick auf eine Rissprävention erforderlich.

Es ist daher Aufgabe der vorliegenden Erfindung ein Verfahren zur Verfügung zu stellen, mittels dessen die Rissbildung an Flugzeugstrukturteilen, die Schäden in Form von Einritzungen aufweisen, verringert werden kann und der Rissfortschritt verlangsamt werden kann. Das Verfahren soll es ermöglichen, die Bereiche der Schäden zu behandeln und gleichzeitig nur eine möglichst geringe Schwächung der die Schäden umgebenden Bereiche zu verursachen. Ferner soll die Oberfläche durch das Verfahren möglichst wenig aufgeraut werden. Außerdem soll eine Rissbildung und ein Rissfortschritt besonders wirtschaftlich vermieden bzw. verlangsamt werden.

Erfindungsgemäß wird diese Aufgabe durch ein Reparaturverfahren zum Verhindern einer Rissbildung und zur Verlangsamung eines Rissfortschritts in **bei einer unsachgemäßen Wartung beschädigten** metallischen Flugzeugstrukturen mittels Laserschockstrahlen mit den Merkmalen des Patentanspruchs 1 gelöst.

Für das Reparaturverfahren zum Verhindern einer Rissbildung und zur Verlangsamung eines Rissfortschritts in **bei einer unsachgemäßen Wartung beschädigten** metallischen Flugzeugstrukturen mittels Laserschockstrahlen wird in einem ersten Verfahrensschritt ein Flugzeugstrukturteil bereitgestellt, das eine Schadstelle aufweist, wobei es sich bei der Schadstelle um eine Beschädigung der Oberfläche in Form einer bei einer unsachgemäßen Wartung aufgetretenen Einritzung handelt.

Da das Flugzeugstrukturteil nachfolgend mit hochenergetischen Laserstrahlen bestrahlt wird, erfolgt die Bereitstellung bevorzugt in einem abgeschirmten Bereich, um Schäden an der Peripherie durch die Laserstrahlen zu vermeiden. Dazu wird bevorzugt eine lokale Abschirmung der zu bestrahlenden Fläche vorgenommen, da zum Einen die Abschirmung des gesamten Flugzeuges auf Grund seiner Größe aufwändig ist und zum anderen empfindliche Flugzeugteile, wie z.B. die Triebwerke vor Laserstrahlen geschützt werden sollen. Das Flugzeug kann dazu entweder unter eine entsprechende stationäre Abschirmung zum Beispiel in einen Hangar verbracht oder mittels einer mobil einsetzbaren Abschirmvorrichtung abgeschirmt werden. Der Vorteil dieser Varianten liegt darin, dass das Bauteil, das die Schadstelle aufweist, nicht ausgebaut werden muss, was einen erheblichen Aufwand bedeutet und das Risiko erneuter Beschädigungen birgt.

In einem nachfolgenden Verfahrensschritt erfolgt ein Bestrahlen eines ersten Oberflächenbereiches des Flugzeugstrukturteils nahe der Schadstelle mittels eines ersten gepulsten Laserstrahls mit einer ersten Wellenlänge und einer ersten Pulsungsfrequenz, wobei Energie von dem ersten Laserstrahl durch das Flugzeugstrukturteil absorbiert wird und eine Druckwelle durch das Flugzeugstrukturteil verläuft, die Druckvorspannungen im Flugzeugstrukturteil erzeugt.

Durch den auf die Bauteiloberfläche auftretenden gepulsten Laserstrahl aus der Laserstrahlquelle, wird eine starke lokale Druckkraft auf einen Abschnitt der Oberfläche erzeugt. An der Auftreffstelle des Laserstrahls entsteht dabei durch eine plötzliche Abtragung oder Verdampfung einer dünnen Schicht dieser Oberfläche oder einer Beschichtung (wie zum Beispiel eines Bandes oder einer Anstrich) ein Plasma, wodurch eine Explosivkraft erzeugt wird. Der Druckimpuls aus dem sich rasch ausdehnenden Plasma gibt eine in den Gegenstand wandernde Schockwelle ab. Diese von dem Laserimpuls bewirkte Druckschockwelle führt zu tiefen plastischen Druckverformungen im Bauteil. Diese plastischen Verformungen erzeugen im Material Druckrestspannungen. Die der vorliegenden Erfindung zugrunde liegende Idee besteht darin, dass die Rissbildung und der Rissfortschritt in Flugzeugstrukturen in an eine Schadstelle z.B. eine Einritzung angrenzenden Bereichen wesentlich dadurch reduziert wird, dass in die Aluminiumbasislegierungen solche tief hereinreichende Druckspannungen eingebracht werden. Dadurch kann ohne einen Austausch des betreffenden Bauteils wirkungsvoll eine Haltbarkeitsverbesserung um eine Schadstelle herum erzielt werden. Es kann mittels des erfindungsgemäßen Verfahrens bei einer versehentlichen Beschädigung der Oberfläche des Flugzeugstrukturteils während der Wartung durch das Laserschockstrahlen um den Kratzerbereich herum, vermieden werden, dass die Kratzer bei einer dynamischen Dauerbelastung des Flugzeugstrukturteils Ermüdungsrisse verursachen.

Die Vorteile von einem Verwenden von Laserschockstrahlen zur Verbesserung der Ermüdungsfestigkeit von bestimmten Strukturbereichen und dem Behandeln von Kratzerbereichen sind die folgenden: Die Wartungsintervalle betreffend die Tragwerksfestigkeit können verlängert werden. Dadurch können die Betriebskosten gesenkt werden. Die Flugzeugstandzeit am Boden während der Wartung kann durch die einfache Reparatur von Kratzern verringert werden. Die Flugsicherheit und somit die Sicherheit der Passagiere kann durch die verbesserten Eigenschaften der Tragstrukturen erhöht werden.

In den Unteransprüchen finden sich vorteilhafte Ausgestaltungen und Verbesserungen der Erfindung.

Gemäß einer bevorzugten Weiterbildung des erfindungsgemäßen Verfahrens umgibt der erste durch Laserschockstrahlen behandelte Oberflächenbereich die Schadstelle vollständig. Dadurch wird ein Rissfortschritt von der Schadstelle aus in alle Richtungen vermieden. Besonders bevorzugt kann sich bei einer Schadstelle am Rande des Flugzeugstrukturteils der mittels Laserschockstrahlen behandelte Oberflächenbereich zwischen der Schadstelle und wichtigen Strukturbereichen des Bauteils erstrecken, und somit eine Rissfortschrittsblockade in eine bestimmte Richtung darstellen, um eine Rissausbreitung in bestimmte Bauteilbereiche zu verhindern.

Gemäß einer bevorzugten Weiterbildung des erfindungsgemäßen Verfahrens wird der erste Oberflächenbereich nach einem ersten Laserschockstrahlen mittels eines zweiten Laserstrahls schockgestrahlt, der eine andere Wellenlänge und/oder eine andere Pulsungsfrequenz als der erste Laserstrahl aufweist. Durch die kombinierte Bearbeitung mittels zweier unterschiedlicher Laserstrahlen kann sehr genau eine gewünschte Veränderung der Materialeigenschaften eingestellt werden. So können über die Wellenlänge des Lasers und die Pulsungsfrequenz die Art der Druckrestspannungen und deren Tiefe im Material sowie die Beeinflussung der Bauteiloberfläche eingestellt werden.

Gemäß einer bevorzugten Weiterbildung des erfindungsgemäßen Verfahrens wird ein zweiter Oberflächenbereich nahe des ersten Oberflächenbereichs mittels eines zweiten Laserstrahls mit einer zweiten Wellenlänge und einer zweiten Pulsungsfrequenz bearbeitet. Bevorzugt ist dieser zweite Oberflächenbereich den ersten Oberflächenbereich umgebend angeordnet. Hierbei können im Bauteilmaterial unter dem zweiten Oberflächenbereich andere Druckvorspannungen gebildet werden als im Bauteilmaterial unter dem ersten Oberflächenbereich. Hierdurch wird es mittels der geänderten Materialeigenschaften im Material unter dem zweiten Oberflächenbereich ermöglicht, zu verhindern, dass sich Risse die sich durch den ersten Oberflächenbereich hindurch gebildet haben, weiter entwickeln.

Gemäß einer bevorzugten Weiterbildung des erfindungsgemäßen Verfahrens wird die Leistung des ersten Laserstrahls in Abhängigkeit von der Distanz der Auftreffstelle des ersten Lasers auf der ersten Oberfläche zu der Schadstelle variiert. Mittels dieser Ausbildung des erfindungsgemäßen Verfahrens können die Druckvorspannungen im Flugzeugstrukturbauteil skaliert in Abhängigkeit vom Abstand zu der Schadstelle erzeugt werden. Das so erzeugte Bauteil weist einen Druckvorspannungsgradienten auf, der bevorzugt zur Schadstelle zu oder auch davon weg zunehmen kann. Der allmähliche Übergang von dem mittels Laserschockstrahlen behandelten Bauteilmaterial zu unbehandeltem Bauteilmaterial ermöglicht eine verbesserte Dauerfestigkeit des Bauteils.

Gemäß einer bevorzugten Weiterbildung des erfindungsgemäßen Verfahrens wird nach dem Laserschockstrahlen die Schadstelle mit einer Beschichtung auf Kunststoffbasis versehen. Diese Beschichtung kann die Schadstelle abschließen und somit das Eindringen von Feuchtigkeit in die Schadstelle vermeiden. Dadurch kann die Korrosionsbeständigkeit verbessert werden, insbesondere dann, wenn durch die Schadstelle eine Oberflächenbeschichtung beschädigt wurde. Bevorzugt kann auch eine Eloxierung durchgeführt werden.

Gemäß einer bevorzugten Weiterbildung des erfindungsgemäßen Verfahrens wird nach dem Laserschockstrahlender der jeweilige Oberflächenbereich spanend bearbeitet. Auf Grund der Laserbearbeitung ergeben sich häufig Aufrauungen der Oberfläche am Bauteil im dem mit dem Laser bestrahlten Bereich. Hier ist es vorteilhaft eine geglättete Oberfläche zu erhalten. Dazu wird der gelaserte Oberflächenbereich besonders bevorzugt abgeschliffen, bevorzugt poliert oder gestrahlt.

Gemäß einer bevorzugten Weiterbildung des erfindungsgemäßen Verfahrens wird beim Laserschockstrahlen der Laserstrahl während der Bestrahlung bahnförmig geführt, wobei mittels einer optischen Sensorik die Position der Schadstelle erfasst wird und der Laserstrahl so über das Flugzeugstrukturteil geführt wird, dass ein festgelegter Abstand zur Schadstelle eingehalten wird. Durch die sensorgeführte Bahnsteuerung des Laserstrahls kann ein genauer Abstand zur Schadstelle eingestellt werden. Der Laserstrahl kann dabei automatisch z.B. weitgehend parallel zu einer linearen Einritzung geführt werden. So kann ein versehentliches Bestrahlen der Schadstelle selber vermieden werden, wenn dies nicht gewünscht ist.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine schematische Schnittdarstellung einer Nietverbindung von zwei Flugzeugstrukturteilen;
- Fig. 2: eine schematische Schnittdarstellung von einem Laserschockstrahlen eines Flugzeugstrukturteils gemäß einer ersten Ausführungsform;
- Fig. 3: eine schematische Schnittdarstellung von einem Laserschockstrahlen eines Flugzeugstrukturteils gemäß einer zweiten Ausführungsform.

In den Figuren bezeichnen dieselben Bezugszeichen gleiche oder funktionsgleiche Komponenten, soweit nichts Gegenteiliges angegeben ist.

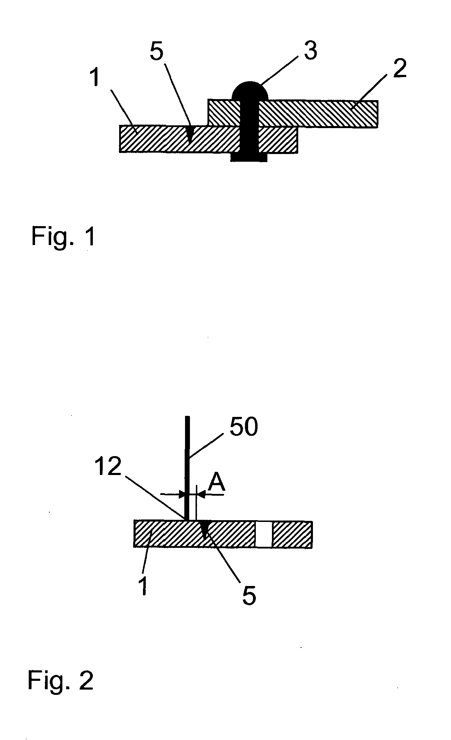

Fig. 1 zeigt eine schematische Schnittdarstellung einer Nietverbindung 3 von zwei Flugzeugstrukturteilen 1, 2. Ein erstes Flugzeugstrukturteil 1 und ein zweites Flugzeugstrukturteil 2 liegen im Überlappungsstoß übereinander. Sie werden durch Nietverbindungen 3 zusammengehalten. Im ersten Flugzeugstrukturteil 1 befindet sich eine Schadstelle 5, wie sie z.B. als Einritzung beim Entfernen von aus dem Überlappungsstoß herausausgequetschten Dichtpasten mittels eines Messers entstehen kann. Die Schadstelle 5 ist hier im Wesentlichen linear und verläuft in die Bildebene hinein.

Fig. 2 zeigt eine schematische Schnittdarstellung von einem Laserschockstrahlen eines Flugzeugstrukturteils 1 gemäß einer ersten Ausführungsform. Das Flugzeugstrukturteil 1 ist hier ohne das zweite Flugzeugstrukturteil 2 und ohne die Nietverbindungen 3 dargestellt. Die Schadstelle 5 erstreckt sich in die Bildebene hinein. Ein erster Laserstrahl 50 ist auf das Flugzeugstrukturteil 1 gerichtet. Der Laserstrahl 50 trifft an einer Auftreffstelle 12 auf das Flugzeugstrukturteil 1. Die Auftreffstelle 12 hat in diesem Verfahrensstadium einen Abstand A zu der Schadstelle 5. Der Abstand A ist in der Figur mittels einer vertikalen Hilfslinie und zwei Pfeilen angegeben.

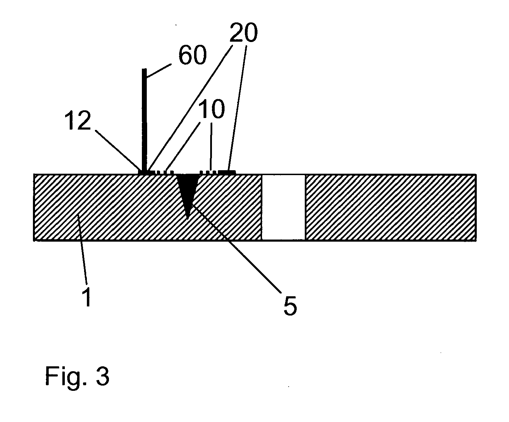

Fig. 3 zeigt eine schematische Schnittdarstellung von einem Laserschockstrahlen eines Flugzeugstrukturteils 1 gemäß einer zweiten Ausführungsform. Neben der Schadstelle 5 sind ein erster Oberflächenbereich 10 und ein zweiter Oberflächenbereich 20 von dem Flugzeugstrukturteil 1 für eine Laserschockstrahlbearbeitung vorgesehen. In dem dargestellten Verfahrensstadium ist ein zweiter Laserstrahl 60 auf den zweiten Oberflächenbereich 20 an einer Auftreffstelle 12 gerichtet. Der Laser wird bahnförmig über den zweiten Oberflächenbereich 20 bewegt und führt ein Laserschockstrahlen aus. Bei dieser bevorzugten Ausführungsform weist wird das Laserschockstrahlen des zweiten Oberflächenbereiches 20 ergänzend zu dem Laserschockstrahlen des ersten Oberflächenbereiches 10 durchgeführt. Während der erste Oberflächenbereich mit dem ersten Laserstrahl 50 laserschockgestrahlt wurde, wird für den zweiten Oberflächenbereich ein zweiter Laserstrahl 60 eingesetzt. Bei diesem Ausführungsbeispiel hat der zweite Laserstrahl 60 andere Eigenschaften als der erste Laserstrahl 50. So ist hier die Pulsungsfrequenz und eingesetzte Lichtwellenlänge des zweiten Laserstrahls unterschiedlich zu der des ersten Laserstrahls 50, um in den Materialbereichen unter dem ersten Oberflächenbereich 10 und dem zweiten Oberflächenbereich 20 verschiedene Materialeigenschaftsveränderungen zu bewirken. In jedem Fall entsteht wird durch den gepulsten Laserstrahl 60 an der Auftreffstelle 12 des Laserstrahls 60 dabei durch eine plötzliche Abtragung oder Verdampfung einer dünnen Schicht dieser Oberfläche oder einer Beschichtung (wie zum Beispiel eines Bandes oder einer Anstrich) ein Plasma, wodurch eine Explosivkraft erzeugt wird. Der Druckimpuls aus dem sich rasch ausdehnenden Plasma gibt eine in den Gegenstand wandernde Schockwelle ab. Diese von dem Laserimpuls bewirkte Druckschockwelle führt zu tiefen plastischen Druckverformungen im Bauteil. Diese plastischen Verformungen erzeugen im Material Druckrestspannungen, die einer Entstehung bzw. einem sich Ausbreiten von Ermüdungsrissen entgegenwirken. Durch das erfindungsgemäße Verfahren kann somit wirksam eine Schadstelle gegen eine Ermüdungsrissbildung stabilisiert werden.

Obwohl die vorliegende Erfindung anhand bevorzugter Ausführungsbeispiele vorliegend beschrieben wurde, ist sie darauf nicht beschränkt, sondern auf vielfältige Weise modifizierbar.

### Bezugszeichenliste

| | |
|---|---|
| 1 | Flugzeugstrukturteil |
| 5 | Schadstelle |
| 10 | erster Oberflächenbereich |
| 12 | Auftreffstelle |
| 20 | zweiter Oberflächenbereich |
| 50 | erster Laserstrahl |
| 60 | zweiter Laserstrahl |
| A | Abstand |

## Patentansprüche

1. Reparaturverfahren zum Verhindern einer Rissbildung und zur Verlangsamung eines Rissfortschritts in bei einer unsachgemäßen Wartung beschädigten metallischen Flugzeugstrukturen mittels Laserschockstrahlen mit folgenden Verfahrensschritten:
(a) Bereitstellen eines Flugzeugstrukturteils (1) mit einer Schadstelle (5), wobei es sich bei der Schadstelle (5) um eine Beschädigung der Oberfläche in Form einer bei einer unsachgemäßen Wartung aufgetretenen Einritzung (5) handelt;
(b) Bestrahlen eines ersten Oberflächenbereiches (10) des Flugzeugstrukturteils (1) nahe der Schadstelle (5) mittels eines ersten gepulsten Laserstrahls (50) mit einer ersten Wellenlänge und einer ersten Pulsungsfrequenz, wobei das Laserschockstrahlen um den Bereich der Einritzung herum erfolgt, Energie von dem ersten Laserstrahl (50) durch das Flugzeugstrukturteil (1) absorbiert wird und eine Druckwelle durch das Flugzeugstrukturteil (1) verläuft, die eine Druckvorspannung im Flugzeugstrukturteil (1) erzeugt.

2. Verfahren nach Anspruch 1,
**dadurch gekennzeichnet,**
**dass** der erste Oberflächenbereich (10) die Schadstelle (5) vollständig umgibt.

3. Verfahren nach Anspruch 1 oder Anspruch 2,
**dadurch gekennzeichnet,**
**dass** in einem Verfahrensschritt (c) nach dem Verfahrensschritt (b) der erste Oberflächenbereich (10) mittels eines zweiten Laserstrahls (60) mit einer zweiten Wellenlänge und einer zweiten Pulsungsfrequenz bestrahlt wird, wobei die zweite Wellenlänge und die zweite Pulsungsfrequenz ungleich der ersten Wellenlänge bzw. ersten Pulsungsfrequenz ist.

4. Verfahren nach einem der vorhergehenden Ansprüche,
**dadurch gekennzeichnet,**
**dass** in einem Verfahrensschritt (c) nach dem Verfahrensschritt (b) ein zweiter Oberflächenbereich (20) nahe des ersten Oberflächenbereichs (10) mittels eines zweiten Laserstrahls (60) mit einer zweiten Wellenlänge und einer zweiten Pulsungsfrequenz bearbeitet wird, wobei die zweite Wellenlänge und die zweite Pulsungsfrequenz ungleich der ersten Wellenlänge bzw. ersten Pulsungsfrequenz ist.

5. Verfahren nach Anspruch 3 oder Anspruch 4,
**dadurch gekennzeichnet,**
**dass** die zweite Pulsungsfrequenz wenigstens 20% größer oder kleiner ist als die erste Pulsungsfrequenz.

6. Verfahren nach einem der Ansprüche 3 bis 5,
**dadurch gekennzeichnet,**
**dass** die zweite Wellenlänge wenigstens 20% größer oder kleiner ist als die erste Wellenlänge.

7. Verfahren nach wenigstens einem der vorhergehenden Ansprüche,
**dadurch gekennzeichnet,**
**dass** sich der erste Oberflächenbereich (10) weniger als 20 mm von der Schadstelle (5) entfernt erstreckt.

8. Verfahren nach wenigstens einem der Ansprüche 3 bis 7,
**dadurch gekennzeichnet,**
**dass** der zweite Oberflächenbereich (20) den ersten Oberflächenbereich (10) vollständig umschließt.

9. Verfahren nach wenigstens einem der Ansprüche 3 bis 8,
**dadurch gekennzeichnet,**
**dass** sich der zweite Oberflächenbereich (20) weniger als 40 mm von der Schadstelle (5) entfernt erstreckt.

10. Verfahren nach wenigstens einem der vorhergehenden Ansprüche,
**dadurch gekennzeichnet,**
**dass** die Leistung des ersten Laserstrahls (50) in Abhängigkeit von der Distanz der Auftreffstelle (12) des ersten Lasers (50) auf der ersten Oberfläche (10) zu der Schadstelle (5) variiert wird.

11. Verfahren nach Anspruch 10,
**dadurch gekennzeichnet,**
**dass** die Leistung des ersten Laserstrahls (50) mit zunehmender Distanz der Auftreffstelle (12) des ersten Lasers (50) auf der ersten Oberfläche (10) zu der Schadstelle (5) erhöht wird.

12. Verfahren nach wenigstens einem der vorhergehenden Ansprüche,
**dadurch gekennzeichnet,**
**dass** in einem Verfahrensschritt (y) nach dem Verfahrensschritt (b) oder nach dem Verfahrensschritt (c) die Schadstelle (5) mit einer Beschichtung auf Kunststoffbasis versehen wird.

13. Verfahren nach wenigstens einem der vorhergehenden Ansprüche,
**dadurch gekennzeichnet,**
**dass** in einem Verfahrensschritt (z) nach dem Verfahrensschritt (b) oder dem Verfahrensschritt (c) der erste Oberflächenbereich (10) und/oder der zweite Oberflächenbereich (20) spanend bearbeitet werden.

14. Verfahren nach wenigstens einem der vorhergehenden Ansprüche,
**dadurch gekennzeichnet,**
**dass** im Verfahrensschritt (b) der erste Laserstrahl (50) während der Bestrahlung bahnförmig im ersten Oberflächenbereich (10) geführt wird, wobei mittels einer optischen Sensorik die Position der Schadstelle (5) erfasst wird und der Laserstrahl (50) so über das Flugzeugstrukturteil (1) geführt wird, dass ein festgelegter Abstand (A) zur Schadstelle (5) eingehalten wird.

## Claims

1. Repair method for preventing tear formation and for retarding tear progress in metal aircraft structures which have been damaged during improper maintenance, by means of laser shock irradiation, having the following method steps:
(a) providing an aircraft structural part (1) comprising a damaged spot (5), the damaged spot (5) being surface damage in the form of a scratch (5) which occurred during improper maintenance;
(b) irradiating a first surface region (10) of the aircraft structural part (1) close to the damaged spot (5) by means of a first pulsed laser beam (50) having a first wavelength and a first pulse frequency, the laser shock irradiation taking place around the region of the scratch, energy from the first laser beam (50) being absorbed by the aircraft structural part (1), and a compression wave passing through the aircraft structural part (1) and generating a compression bias in the aircraft structural part (1).

2. Method according to claim 1, **characterised in that** the first surface region (10) fully encloses the damaged spot (5).

3. Method according to either claim 1 or claim 2, **characterised in that**, in a method step (c) after method step (b), the first surface region (10) is irradiated by means of a second laser beam (60) having a second wavelength and a second pulse frequency, the second wavelength and the second pulse frequency being unequal to the first wavelength and the first pulse frequency.

4. Method according to any one of the preceding claims, **characterised in that**, in a method step (c) after method step (b), a second surface region (20) close to the first surface region (10) is machined by means of a second laser beam (60) having a second wavelength and a second pulse frequency, the second wavelength and the second pulse frequency being unequal to the first wavelength and the first pulse frequency.

5. Method according to either claim 3 or claim 4, **characterised in that** the second pulse frequency is at least 20 % greater than or less than the first pulse frequency.

6. Method according to any one of claims 3 to 5, **characterised in that** the second wavelength is at least 20 % greater than or less than the first wavelength.

7. Method according to at least one of the preceding claims, **characterised in that** the first surface region (10) extends less than 20 mm away from the damaged spot (5).

8. Method according to at least one of claims 3 to 7, **characterised in that** the second surface region (20) fully encloses the first surface region (10).

9. Method according to at least one of claims 3 to 8, **characterised in that** the second surface region (20) extends less than 40 mm away from the damaged spot (5).

10. Method according to at least one of the preceding claims, **characterised in that** the power of the first laser beam (50) is varied as a function of the distance of the point of incidence (12) of the first laser (50) on the first surface (10) from the damaged spot (5).

11. Method according to claim 10, **characterised in that** the power of the first laser beam (50) is increased with increasing distance of the point of incidence (12) of the first laser (50) on the first surface (10) from the damaged spot (5).

12. Method according to at least one of the preceding claims, **characterised in that**, in a method step (y) after method step (b) or method step (c), the damaged spot (5) is provided with a coating based on plastics material.

13. Method according to at least one of the preceding claims, **characterised in that**, in a method step (z) after method step (b) or method step (c), the first surface region (10) and/or the second surface region (20) are machined by cutting.

14. Method according to at least one of the preceding claims, **characterised in that**, in method step (b), the first laser beam (50) is guided in the first surface region (10) in a web shape during the irradiation, the position of the damaged spot (5) being detected by means of an optical sensor system, and the laser beam (50) being guided over the aircraft structural part (1) in such a way that a fixed distance (A) from the damaged spot (5) is maintained.

## Revendications

1. Procédé de réparation destiné à empêcher la formation de fissures et à ralentir la propagation de fissures dans des structures aéronautiques métalliques endommagées suite à un entretien inadéquat au moyen d'un traitement par choc laser comprenant les étapes de procédé suivantes :
(a) fourniture d'une pièce structurelle d'avion (1) présentant une partie endommagée (5), cette partie endommagée (5) étant une détérioration de surface sous forme d'un fendillement (5) apparu suite à un entretien inadéquat ;
(b) irradiation d'une première zone de surface (10) de la pièce structurelle d'avion (1) à côté de la partie endommagée (5) au moyen d'un premier faisceau laser pulsé (50) présentant une première longueur d'onde et une première fréquence d'impulsion, le choc laser étant produit autour de la zone du fendillement, l'énergie du premier faisceau laser (50) étant absorbée par la pièce structurelle d'avion (1) et une onde de pression se propageant à travers la pièce structurelle d'avion (1) et génère une précontrainte de compression dans la pièce structurelle d'avion (1).

2. Procédé selon la revendication 1, **caractérisé en ce que** la première zone de surface (10) entoure complètement la partie endommagée (5).

3. Procédé selon la revendication 1 ou la revendication 2, **caractérisé en ce que**, dans une étape de procédé (c) après l'étape de procédé (b), la première zone de surface (10) est irradiée au moyen d'un second faisceau laser (60) présentant une seconde longueur d'onde et une seconde fréquence d'impulsion, la seconde longueur d'onde et la seconde fréquence d'impulsion étant différentes de la première longueur d'onde respectivement première fréquence d'impulsion.

4. Procédé selon l'une des revendications précédentes, **caractérisé en ce que**, dans une étape de procédé (c) après l'étape de procédé (b), une seconde zone de surface (20) à côté de la première zone de surface (10) est traitée au moyen d'un second faisceau laser (60) présentant une seconde longueur d'onde et une seconde fréquence d'impulsion, la seconde longueur d'onde et la seconde fréquence d'impulsion étant différentes de la première longueur d'onde respectivement première fréquence d'impulsion.

5. Procédé selon la revendication 3 ou la revendication 4, **caractérisé en ce que** la seconde fréquence d'impulsion est supérieure ou inférieure d'au moins 20 % à la première fréquence d'impulsion.

6. Procédé selon l'une des revendications 3 à 5, **caractérisé en ce que** la seconde longueur d'onde est supérieure ou inférieure d'au moins 20 % à la première longueur d'onde.

7. Procédé selon au moins une des revendications précédentes, **caractérisé en ce que** la première zone de surface (10) s'étend sur une distance inférieure à 20 mm de la partie endommagée (5).

8. Procédé selon au moins une des revendications 3 à 7, **caractérisé en ce que** la seconde zone de surface (20) encercle complètement la première zone de surface (10).

9. Procédé selon au moins une des revendications 3 à 8, **caractérisé en ce que** la seconde zone de surface (20) s'étend sur une distance inférieure à 40 mm de la partie endommagée (5).

10. Procédé selon au moins une des revendications précédentes, **caractérisé en ce que** la puissance du premier faisceau laser (50) varie en fonction de la distance du point d'impact (12) du premier laser (50) sur la première surface (10) par rapport à la partie endommagée (5).

11. Procédé selon la revendication 10, **caractérisé en ce que** la puissance du premier faisceau laser (50) augmente avec une distance croissante du point d'impact (12) du premier laser (50) sur la première surface (10) par rapport à la partie endommagée (5).

12. Procédé selon au moins une des revendications précédentes, **caractérisé en ce que**, dans une étape de procédé (y) après l'étape de procédé (b) ou après l'étape de procédé (c), la partie endommagée (5) est revêtue d'une couche à base de matière plastique.

13. Procédé selon au moins une des revendications précédentes, **caractérisé en ce que**, dans une étape de procédé (z) après l'étape de procédé (b) ou après l'étape de procédé (c), la première zone de surface (10) et/ou la seconde zone de surface (20) sont usinées.

14. Procédé selon au moins une des revendications précédentes, **caractérisé en ce que**, dans l'étape de procédé (b), le premier faisceau laser (50) est dirigé pendant l'irradiation le long d'une trajectoire dans la première zone de surface (10), la position de la partie endommagée (5) étant détectée au moyen d'un capteur optique et le faisceau laser (50) étant dirigé au-dessus de la pièce structurelle d'avion (1) de telle sorte qu'une distance définie (A) par rapport à la partie endommagée (5) est respectée.
